# FASCICULE DE BREVET EUROPEEN

(11) **EP 0 479 028 B1**
(45) Date de publication et mention de la délivrance du brevet: **07.09.1994**
(21) Numéro de dépôt: 91115716.2
(22) Date de dépôt: 17.09.1991
(51) Int. Cl.: B29D 30/68

(54) **Appareil de recreusage des pneumatiques**
Vorrichtung zum Wiedereinschneiden von Reifenprofilen
Apparatus for reprofiling tyres

(30) Priorité: 02.10.1990 FR 9012226
(43) Date de publication de la demande: 08.04.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Inez, Arthur, F-63800 Cournon d'Auvergne (FR)
(74) Mandataire: Bauvir, Jacques

(56) Documents cités:
- FR-A- 1 009 054
- FR-A- 2 035 168
- US-A- 2 063 894

## Description

La présente invention se rapporte à la rénovation des pneumatiques par recreusage de la sculpture de leurs bandes de roulement. Elle concerne plus particulièrement un appareil portatif pour effectuer cette opération manuellement.

De tels appareils sont bien connus. On en voit un exemple dans le brevet US-A-2 222 036 ou la demande FR-A-2 035 168. Le couteau de recreusage a la forme générale d'un U, au profil exact du sillon que l'on souhaite creuser, ou recreuser. Ce couteau est le plus souvent chauffé pour faciliter l'opération. Il est important de bien respecter une certaine profondeur de recreusage. A cette fin, les appareils portatifs pour une utilisation manuelle comportent une semelle que l'on applique sur la surface du pneumatique à recreuser, la profondeur de pénétration du couteau étant réglée par rapport à cette semelle.

La parfaite maîtrise de cette profondeur de recreusage est importante parce qu'il ne faut pas atteindre les fils de renforcement constituant la carcasse ou la ceinture du pneumatique, ou constituant une nappe de protection de celle-ci. C'est la raison pour laquelle on a tenté d'automatiser cette opération de recreusage afin d'en garantir la qualité et la régularité. Le brevet US-A-4 147 196 décrit une machine comportant un palpeur mesurant, soit la position des nappes métalliques disposées sous la bande de roulement, soit le niveau exact de la surface du pneumatique pour contrôler la profondeur de pénétration du couteau de recreusage.

L'objectif de la présente invention est de rendre encore plus précise cette opération de recreusage. Cette opération de recreusage est surtout utilisée en pneumatiques pour poids lourds. Le recreusage permet bien évidemment de prolonger l'utilisation du pneumatique. Lorsque la sculpture ainsi reconstituée est usée, ce type de pneumatique est susceptible d'être rechapé, pour un nouveau cycle d'utilisation pouvant encore se terminer par un recreusage. Il est de la plus haute importance donc que l'opération de recreusage n'abîme pas la structure de renforcement (nappe de sommet, nappe de protection) du pneumatique non seulement pour des raisons de sécurité d'utilisation du pneumatique recreusé, mais aussi pour des raisons économiques : toute dégradation aux nappes de renforcement risque de rendre la carcasse inutilisable pour le rechapage ou, à tout le moins, de rendre le rechapage plus coûteux.

Partant de cette situation, l'invention a donc pour but de déterminer sur le pneumatique une référence géométrique précise et fiable sur laquelle on puisse baser l'opération de recreusage. L'invention repose sur une observation : même lorsque le pneumatique est usé de façon irrégulière, même lorsque la forme d'usure est telle que la section de la surface du pneumatique par tout plan perpendiculaire à l'axe de rotation s'éloigne nettement de la forme circulaire, il subsiste à la surface du pneumatique une zone géométrique qui conserve toujours la forme précise du pneumatique neuf. Cette zone, c'est le fond des rainures de la sculpture. Sur le pneumatique neuf, les sculptures sont moulées de telle façon qu'elles laissent un "sous-creux", c'est-à-dire une épaisseur de caoutchouc entre le fond de la sculpture et la partie radialement la plus élevée des renforcements. La valeur de ce sous-creux est bien déterminée et connue pour chaque type de pneumatique puisqu'il s'agit d'une cote de fabrication.

Ainsi, l'invention propose d'utiliser pour le recreusage un appareil qui s'appuie sur le fond de la sculpture à recreuser, et non pas sur la surface du pneumatique, comme auparavant. En particulier, il est proposé d'utiliser un appareil manuel car, grâce à l'invention, ce type d'utilisation est tout à fait compatible avec le haut degré de précision requis.

L'appareil selon l'invention, conçu pour le recreusage des rainures dont sont pourvues les bandes de roulement des pneumatiques, ledit appareil comportant un couteau dont la forme correspond à la section desdites rainures à recreuser est caractérisé en ce qu'il comporte un guide qui prend appui sur le fond de la rainure existant avant le recreusage, de sorte que la profondeur de recreusage est déterminée par la distance (d) existant entre ledit couteau et le guide.

Les figures jointes, consultées avec la description suivante, permettent de bien comprendre l'invention.

La figure 1 montre un appareil de recreusage, en cours d'utilisation, vu en perspective.

La figure 2 est une vue de face du même appareil.

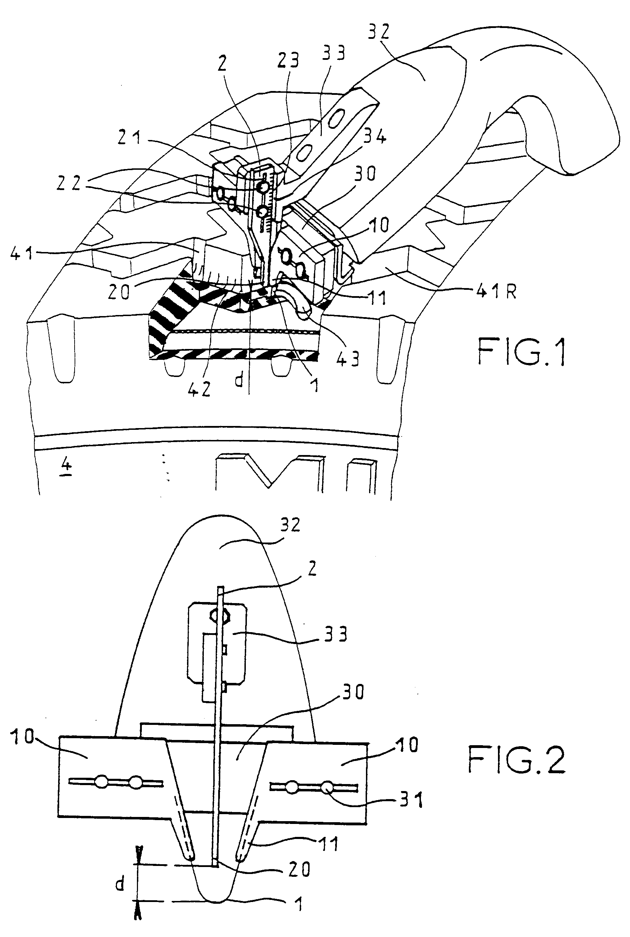

A la figure 2, on aperçoit très bien le profil du couteau 1 dont la forme correspond à la section des rainures à recreuser. Ce couteau est constitué par une lame pliée de telle sorte qu'elle ait l'allure générale d'un U. Les extrémités du couteau 1 sont noyées dans des pattes 10 de fixation du couteau 1. Le couteau utilisé est de préférence un couteau chauffant et les prolongements 11 de ces pattes, enrobant immédiatement le couteau 1, sont dimensionnées de façon à pouvoir servir de masse thermique régulatrice de la température du couteau 1, de sorte que celui-ci ne s'échauffe jamais au point de perdre ses propriétés mécaniques lorsque l'on soulève l'appareil et qu'aucune dissipation ne peut avoir lieu par le pneumatique.

Les pattes 10 sont fixées sur un support 30, au moyen de boulons 31 ; le support est lui-même solidaire d'une poignée 32 permettant, dans l'exemple de mise en oeuvre de l'invention illustré, une utilisation manuelle de l'appareil de recreusage. De façon tout à fait usuelle, il est prévu d'utiliser toute une gamme de couteaux 1 : le choix d'un couteau de cette gamme dépend bien sûr de la section de la rainure à recreuser.

Sur la partie supérieure de la poignée 32, est fixé un second support 33 qui reçoit le guide 2 assurant le réglage de la profondeur de passe du couteau 1. De préférence, la base 20 du guide 2 et le couteau 1 sont disposés sensiblement dans le même plan, afin d'assurer un guidage aussi précis que possible. En d'autres termes, comme le couteau a toujours l'allure d'un U, ladite base 20 est disposée entre les branches du couteau 1.

Du côté opposé à la base 20, le guide 2 comporte une lumière 21. Sa fixation sur le second support 33 est assurée par deux vis 22 passant au travers de la lumière 21. Le guide comporte une échelle de profondeur 23, permettant grâce à un index 34 gravé sur le second support 33, de régler très facilement la profondeur de recreusage, déterminée par la distance "d" que l'on peut mesurer, dans la direction radiale, entre le couteau 1 et la base 20 du guide 2. La capacité maximale de recreusage (valeur maximale de d) est atteinte lorsque la base 20 du guide 2 atteint sensiblement le niveau où les pattes 10 enrobent le couteau 1.

La figure 1 illustre la tenue de l'appareil de recreusage en cours d'opération. On voit le pneumatique 4 à rénover, dont les rainures 41 ont atteint une hauteur résiduelle insuffisante pour continuer à utiliser le pneumatique. L'appareil est tenu par rapport au pneumatique 4 de telle sorte que le couteau 1 et le guide 2 soient orientés sensiblement radialement. Un écorché permet de bien montrer le couteau 1 et le guide 20 en opération.

Le couteau 1 est engagé dans ce qu'il reste de la rainure 41 et enfoncé dans le caoutchouc jusqu'à ce que la base 20 du guide 2 entre en butée contre le fond 42 de ladite rainure 41. Il suffit alors de suivre les motifs de sculptures sur toute la circonférence du pneumatique 4 en maintenant l'appareil appuyé radialement vers le pneumatique. Après enlèvement de copeaux 43, on obtient la rainure recreusée 41R. Notons que cet appreil assurera automatiquement la reproduction des témoins d'usure présents à fond de sculpture, ce qui constitue aussi un avantage de la présente invention.

Pour augmenter la sécurité d'utilisation de l'appareil, il faut interdire toute tentative de recreuser à nouveau un sillon 41R déjà rénové. A cette fin, on peut ajouter à l'appareil une semelle réglable qui vienne en butée à la surface du pneumatique, exactement comme pour les appareils connus. Cette semelle joue alors seulement un rôle de sécurité, et ne sert pas de référence pour le recreusage.

On voit que l'invention permet la réalisation du recreusage de façon très précise, même avec un appreil portatif, très économique à réaliser, et facile à utiliser manuellement. Un recreusage de bonne qualité peut alors être réalisé même dans de petits ateliers de réparation décentralisés.

## Revendications

1. Appareil de recreusage des rainures (41) dont sont pourvues les bandes de roulement des pneumatiques (4), ledit appareil comportant un couteau (1) dont la forme correspond à la section desdites rainures (41) à recreuser caractérisé en ce qu'il comporte un guide (2) prenant appui sur le fond de la rainure (41) existant avant le recreusage, de sorte que la profondeur de recreusage est déterminée par la distance (d) existant entre ledit couteau (1) et le guide (2).

2. Appareil selon la revendication 1, caractérisé en ce que le couteau (1) est un couteau chauffant et en ce que les extrémités du couteau sont noyées dans des pattes 10 de fixation du couteau.

3. Appareil selon la revendication 1 ou 2, caractérisé en ce que la base (20) du guide (2) est disposée sensiblement dans le même plan que le couteau (1).

4. Appareil selon l'une des revendications 1 à 3, caractérisé en ce qu'il comporte une poignée 32 conçue pour une utilisation manuelle.

5. Appareil selon l'une des revendications 1 à 4, caractérisé en ce que ledit guide peut être réglé en profondeur.

## Claims

1. Apparatus for regrooving the grooves (41) of pneumatic tire treads (4), the said apparatus composed of a knife (1) whose shape corresponds to the said grooves (41) section to be regrooved characterized by a guide (2) to press against the bottom of the existing groove (41) before the regrooving, so that the depth of the regrooving is determined by the distance (d) existing between the said knife (1) and the guide (2).

2. Apparatus according to claim 1, characterized by the knife (1) being a heating knife and by the ends of the knife that are embedded in the anchoring clips (10) of the knife.

3. Apparatus according to claims 1 or 2, characterized by the base (20) of the guide (2) positioned approximately in the same plane as the knife (1).

4. Apparatus according to any one of claims 1 through 3, characterized by a handle (32) designed for manual use.

5. Apparatus according to any one of claims 1 through 4, characterized by fact that said guide can be adjusted in depth.

## Patentansprüche

1. Gerät zum Wiedereinschneiden von Kerben (41) mit denen die Laufflächen von Luftreifen (4) versehen sind, wobei das Gerät ein Messer (1) aufweist, dessen Form dem Querschnitt der Kerben (41) entspricht, die erneut einzuschneiden sind, dadurch gekennzeichnet, daß es eine Fuhrung (2) aufweist, die in Anlage ist an den Boden der Kerbe (41), die vor dem Wiedereinschneiden existiert, derart, daß die Wiedereinschnittiefe durch den Abstand (d) bestimmt wird, der zwischen dem Messer (1) und der Fuhrung (2) besteht.

2. Gerät nach Anspruch 1, dadurch gekennzeichnet, daß das Messer (1) ein beheiztes Messer ist, und daß die Enden des Messers in Messer-Befestigungslaschen (10) eingebettet sind.

3. Gerät nach Anspruch 1 oder 2, dadurch gekennzeichnet, daß die Basis (20) der Fuhrung (2) im wesentlichen in derselben Ebene des Messers (1) angeordnet ist.

4. Gerät nach einem der Ansprüche 1 bis 3, dadurch gekennzeichnet, daß es einen Handgriff (32) aufweist, der für eine manuelle Handhabung konzipiert ist.

5. Gerät nach einem der Ansprüche 1 bis 4 dadurch gekennzeichnet, daß die Führung in ihrer Tiefe einstellbar ist.
